# EUROPÄISCHE PATENTSCHRIFT

(11) **EP 3 271 956 B1**
(45) Veröffentlichungstag und Bekanntmachung des Hinweises auf die Patenterteilung: **20.02.2019**
(21) Anmeldenummer: 15816113.3
(22) Anmeldetag: 10.12.2015
(51) Int. Cl.: H01M 2/12

(54) **VORRICHTUNG ZUM AUSGLEICHEN EINES INNENDRUCKES IN EINEM GESCHLOSSENEN GEHÄUSE**
DEVICE FOR EQUALISING AN INTERNAL PRESSURE IN A CLOSED HOUSING
DISPOSITIF SERVANT À ÉQUILIBRER UNE PRESSION INTERNE DANS UN CARTER FERMÉ

(30) Priorität: 19.03.2015 DE 102015205029
(43) Veröffentlichungstag der Anmeldung: 24.01.2018
(73) Patentinhaber: Volkswagen Aktiengesellschaft, 38440 Wolfsburg (DE)
(72) Erfinder: KOCHANSKI, André, 38100 Braunschweig (DE); KIRSCHT, Alexander, 14129 Berlin (DE); BREITKOPF, Aaron, 38102 Braunschweig (DE); ENGEL, Philipp, 10367 Berlin (DE)
(86) Internationale Anmeldenummer: PCT/EP2015/079278
(87) Internationale Veröffentlichungsnummer: WO 2016/146216

(56) Entgegenhaltungen:
- DE-A1-102008 004 358
- DE-A1-102011 080 325
- DE-A1-102012 022 346
- DE-C- 952 881
- US-A- 5 538 807

## Beschreibung

Die Erfindung betrifft eine Vorrichtung zum Ausgleichen eines Innendruckes in einem geschlossenen Gehäuse nach dem Oberbegriff des Patentanspruchs 1 der Erfindung.

Für beispielsweise elektrisch angetriebene oder antreibbare Fahrzeuge sind elektrochemische Energiespeicher erforderlich. Diese elektrochemischen Energiespeicher werden üblicherweise durch ein dichtes Gehäuse vor äußeren Einflüssen geschützt. Um Druckunterschiede infolge von Temperatur- und Luftdruckveränderungen innerhalb und außerhalb des Gehäuses ausgleichen zu können, werden üblicherweise sogenannte Druckausgleichsvorrichtungen eingesetzt. Diese weisen mitunter eine Membran auf, welche eingerichtet ist, Flüssigkeiten zurückzuhalten, während sie Gase passieren lässt. Solche Druckausgleichsvorrichtungen werden vor Druckausgleichsöffnungen von Gehäusen eingesetzt, durch welche ein Gasaustausch erfolgen und so für einen Druckausgleich gesorgt werden kann. So ist aus der DE 10 2012 022 346 A1 ein Batterie- oder Akkumulatorgehäuse oder ein Gehäuse zur Aufnahme einer Batterie oder eines Akkumulators mit einer Gehäuseöffnung bekannt, welche Gehäuseöffnung von einem Trägerkörper mit einem Membran-Abdeckteil und mit einer semipermeablen Membran abgedeckt ist. Das Gehäuse, der Trägerkörper, das Membran-Abdeckteil sowie die Membran sind untereinander wasserdicht verbunden. Die DE 10 2011 080 325 A1, korrespondierend mit der US 2013/0032219 A1, beschreibt eine Druckausgleichsvorrichtung zum Ausgleichen eines Innendrucks in einem Gehäuse einer elektrochemischen Vorrichtung. Die Druckausgleichsvorrichtung umfasst mindestens eine Gasdurchtrittsöffnung im Gehäuse und mindestens ein Membranelement mit einer in Abhängigkeit von einer Änderung des Innendrucks verformbaren, gaspermeablen Membran, durch welche die Gasdurchtrittsöffnung gesperrt ist. Die Membran ist zwischen einem Trägerteil und einem Klemmelement der Druckausgleichsvorrichtung geklemmt. Die Druckausgleichsvorrichtung weist ein mit dem Trägerelement verbundenes Deckelelement, hier als Schutzelement bezeichnet, auf, welches das Membranelement und das Klemmelement zu einem Außenraum des Gehäuses hin abdeckt. Darüber hinaus ist aus der DE 10 2008 004 358 A1, korrespondierend mit der US 8,413,496 B2, eine sogenannte Druckausgleichseinheit, insbesondere für einen Tankdrucksensor in einem Tank eines Kraftfahrzeugs bekannt, welche Druckausgleichseinheit einen Gehäusedeckel und eine gaspermeable Filtermembran umfasst. Die Filtermembran überdeckt eine Luftöffnung des Gehäusedeckels. Ferner ist ein kappenförmiges Abdeckelement vorgesehen, welches die Filtermembran überdeckt. In der Praxis besteht der Bedarf, Druckausgleichsvorrichtungen der vorbeschriebenen Art einer Funktionsprüfung zu unterziehen. Dabei soll insbesondere eine Funktionsprüfung der Membran sowie eine Dichtigkeitsprüfung sämtlicher verbauter Dichtungen erfolgen. Hier setzt die nachfolgend beschriebene Erfindung an.

Aufgabe der Erfindung ist es demnach, eine Druckausgleichsvorrichtung der gattungsgemäßen Art zu schaffen, welche die Voraussetzungen für eine einfache und kostengünstige Funktionsprüfung derselben, insbesondere der verbauten Membran, sowie eine Prüfung der Druckausgleichsvorrichtung und des Gehäuses auf Dichtigkeit bietet.

Ausgehend von einer Vorrichtung zum Ausgleichen eines Innendruckes, nachfolgend auch als Druckausgleichsvorrichtung bezeichnet, in einem geschlossenen Gehäuse, insbesondere einem Gehäuse, in welchem ein elektrochemisches Speichersystem angeordnet ist, mit einem eine Gasdurchtrittsöffnung im Gehäuse abdeckenden und mit dem Gehäuse fluiddicht verbundenen Trägerelement, an dem eine in Abhängigkeit einer Änderung des Innendrucks im Gehäuse verformbare, gaspermeable Membran gelagert ist, die einen ersten Gasdurchtrittskanal des Trägerelements wasserdicht verschließt, wird die gestellte Aufgabe dadurch gelöst, dass das Trägerelement einen zweiten Gasdurchtrittskanal aufweist, der von einem lösbar am Trägerelement befestigten Deckelelement abgedeckt und fluiddicht verschlossen ist.

Durch die Ausbildung zweier voneinander separierter Gasdurchtrittskanäle sind die Voraussetzungen für eine komfortable Funktionsprüfung der verbauten Druckausgleichsvorrichtung, insbesondere der Membran derselben, sowie für eine Prüfung der verbauten Druckausgleichsvorrichtung und des Gehäuses auf Dichtigkeit geschaffen. Durch einfaches Absperren jeweils eines Gasdurchtrittskanals ist entweder die Funktionsprüfung der Membran oder die Prüfung auf Dichtigkeit der Druckausgleichsvorrichtung samt Gehäuse ermöglicht.

Die Unteransprüche beschreiben bevorzugte Weiterbildungen oder Ausgestaltungen der Erfindung.

Danach ist vorgesehen, dass das Deckelelement darüber hinaus den ersten Gasdurchtrittskanal derart beabstandet zur Membran überdeckt, dass deren Verformbarkeit infolge Veränderung des Innendrucks im Behälter gewährleistet ist. Die Beabstandung zwischen dem Deckelelement und dem ersten Gasdurchtrittskanal ist bevorzugt derart gewählt, dass bei einem definierten überhöhten Innendruck im Gehäuse der Membran erlaubt ist, zu bersten. D.h., die Beabstandung muss derart groß gewählt sein, dass sich die Membran im Falle eines überhöhten Innendruckes maximal aufblähen bzw. auswölben kann, um schließlich zu bersten, sofern nicht zusätzlich eine etwaige Bersthilfe, wie ein Durchstechelement etc. vorgesehen sind, welche/s bei einer bestimmten Auswölbung zum Einsatz kommt. Es ist somit vorzugsweise eine Abstützung der Membran am Deckelelement zu vermeiden.

Gemäß einer bevorzugten Ausführungsform der Erfindung sind die beiden Gasdurchtrittskanäle des Trägerelements bauraumoptimiert konzentrisch zueinander angeordnet. Durch die Erfindung mit erfasst ist auch eine Ausführungsform, bei der die beiden Gasdurchtrittskanäle nebeneinander angeordnet sind. Im Hinblick auf besagte konzentrische Anordnung der beiden Gasdurchtrittskanäle ist bevorzugt vorgesehen, dass der erste Gasdurchtrittskanal den zweiten Gasdurchtrittskanal konzentrisch umgibt und zwischen dem Deckelelement und dem mit einer Ring-Membran verschlossenen ersten Gasdurchtrittskanal ein ringförmiger Raum gebildet ist, welcher Raum über wenigstens eine zumindest gasdurchlässige Öffnung im Deckelelement mit der Atmosphärendruck aufweisenden Umgebung des Gehäuses verbunden ist.

Wie die Erfindung weiter vorsieht, ist das Trägerelement bevorzugt lösbar am Gehäuse befestigt, wodurch eine einfache Herstellung des Gehäuses oder eines das Trägerelement aufweisenden Gehäuseteils ermöglicht ist. Die Erfindung beschränkt sich jedoch nicht auf ein lösbares Trägerelement, sondern erfasst auch ein Trägerelement, welches unlösbar, beispielsweise einstückig mit dem Gehäuse oder einem Gehäuseteil desselben ausgebildet ist. So kann das Gehäuse bzw. Gehäuseteil samt Trägerelement beispielsweise einstückig aus Metall, einem Kunststoff oder einem faserverstärkten Kunststoff nach einem Kunststoff-Spritzgießverfahren hergestellt sein/werden.

Wie die Erfindung zusätzlich vorsieht, ist das lösbare Trägerelement am Gehäuse oder an einem, die Gasdurchtrittsöffnung im Gehäuse einnehmenden, Siebelement befestigt, welches in vorteilhafter Weise das Gehäuse im Bereich der Gasdurchtrittsöffnung aussteift. Weiter bevorzugt ist dabei das lösbare Trägerelement nach Art eines Bajonettverschlusses am Gehäuse oder Siebelement befestigt. Bajonettverschlüsse sind einfach herstellbar und bei der Montage leicht zu handhaben. Die Erfindung beschränkt sich jedoch nicht auf besagten Bajonettverschluss, sondern erfasst auch jedwede andere an sich bekannte Fügemaßnahme formschlüssiger und/oder auch kraftschlüssiger Art. So kann das Trägerelement auch durch Verrastung am Gehäuse oder Siebelement befestigt sein/werden.

Im Hinblick auf die Gewährleistung einer elektromagnetischen Verträglichkeit (EMV) des mit der Druckausgleichsvorrichtung bestückten Behälters ist vorgesehen, dass das Siebelement vorteilhaft aus einem metallischen oder einem nichtmetallischen Werkstoff besteht, welcher nichtmetallische Werkstoff jedoch mit einer Metallschicht beschichtet ist. Das Siebelement kann dabei einstückig mit dem Gehäuse hergestellt oder als Anbauteil ausgebildet sein. So kann das Siebelement beispielsweise in einem Stück mit einem Behälter aus Kunststoff nach einem Kunststoff-Spritzgießverfahren hergestellt sein und anschließend eine Metallbeschichtung erfahren. Die Metallbeschichtung kann z.B. durch eine Metallfolie gebildet sein. Demgegenüber kann das Siebelement auch aus einem Metall, wie einem Aluminium oder einer Aluminiumlegierung bestehen und als Einlegeteil für einen Kunststoff-Spritzgießprozess bereitstehen oder es kann das Siebelement am Gehäuse montiert sein, unter Zuhilfenahme von an sich bekannten Mitteln form-, kraft- und/oder stoffschlüssiger Art.

Wie die Erfindung schließlich noch vorsieht, ist gemäß einer besonders vorteilhaften Weiterbildung der Erfindung dem Trägerelement ein mit dem Deckelelement austauschbares und somit mit dem Trägerelement fluiddicht, jedoch lösbar verbindbares Prüfanschluss-Element zugeordnet, welches Prüfanschluss-Element je Gasdurchtrittskanal einen Leitungsanschluss zur Anbindung der Gasdurchtrittskanäle an eine Prüfvorrichtung aufweist, respektive bereitstellt. Durch diese Maßnahme ist ein beabsichtigter oder erforderlicher Prüfprozess der vorbeschriebenen Art einfach und kostengünstig durchführbar. Was das jeweilige Absperren eines Gasdurchtrittskanals anbelangt, ist dieses durch eine dem jeweiligen Gasdurchtrittskanal zugeordnete oder zuordenbare Absperrvorrichtung bewerkstelligbar. Bevorzugt wird besagtes Absperren jedoch durch die vorzugsweise mittels Druckschläuchen an die Leitungsanschlüsse angeschlossene Prüfvorrichtung selbst bewirkt.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: die erfindungsgemäße Vorrichtung in einer perspektivischen Schnittdarstellung in einem an einem Behälter verbauten Zustand,
- Fig. 2: eine Detaildarstellung eines Siebelements der Vorrichtung nach Fig. 1,
- Fig. 3: eine Schnittdarstellung der Vorrichtung, welche die Fügeverbindung zwischen der Vorrichtung und dem Behälter zeigt, und
- Fig. 4: die erfindungsgemäße Vorrichtung in einer perspektivischen Schnittdarstellung gemäß einer vorteilhaften Weiterbildung derselben.

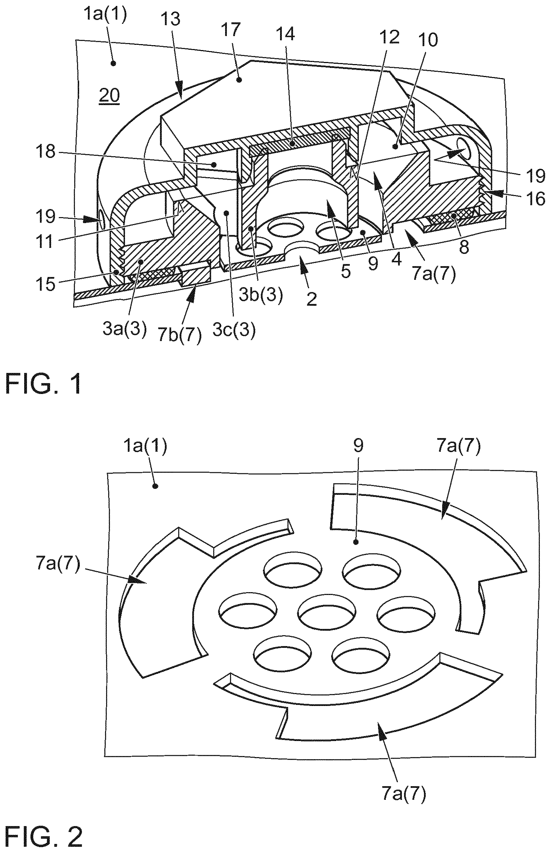

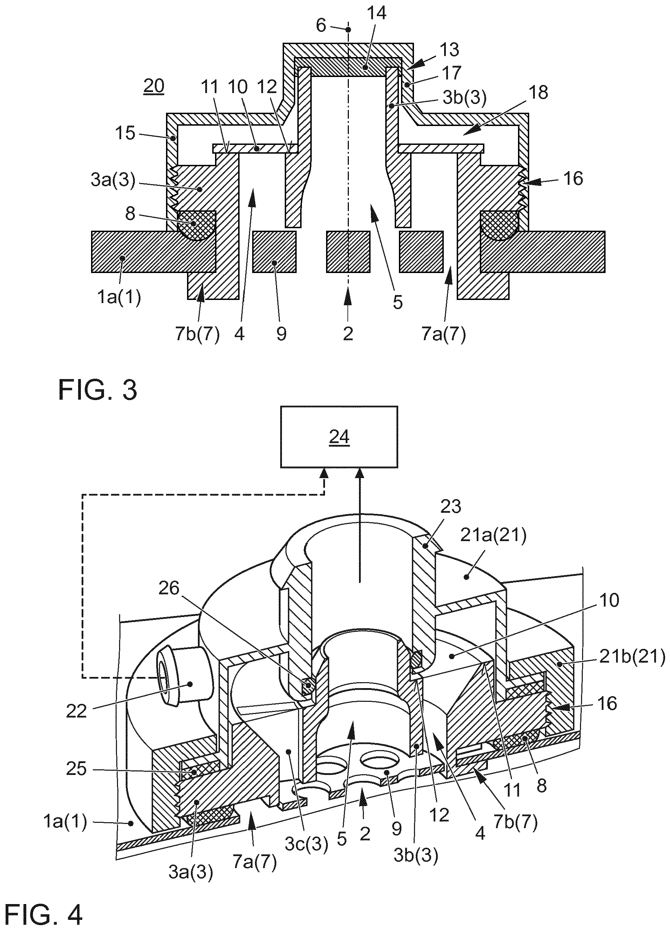

Die Fig. 1 und 3 zeigen lediglich einen Ausschnitt der Gehäusewandung 1a eines geschlossenen Gehäuses 1, welches beispielsweise ein Gehäuse 1 sein kann, in welchem ein nicht zeichnerisch dargestelltes elektrochemisches Speichersystem angeordnet ist. Das Gehäuse 1 respektive dessen Gehäusewandung 1a weist eine Gasdurchtrittsöffnung 2 auf, die von einem mit dem Gehäuse 1 fluiddicht verbundenen Trägerelement 3 einer Vorrichtung zum Ausgleichen eines Innendruckes in dem Gehäuse 1, nachfolgend auch als Druckausgleichsvorrichtung bezeichnet, abgedeckt ist. Das Trägerelement 3 ist gemäß diesem Ausführungsbeispiel weitestgehend rotationssymmetrisch ausgebildet und weist einen ersten und einen zweiten Gasdurchtrittskanal 4, 5 auf, die konzentrisch zueinander angeordnet ist.

Die Gasdurchtrittskanäle 4, 5 sind durch ein erstes, radial außen liegendes, weitestgehend hohlzylindrisches Trägerteil 3a und ein zweites, radial innen liegendes, weitestgehend hohlzylindrisches Trägerteil 3b gebildet. Die Trägerteile 3a, 3b erstrecken sich konzentrisch zur Mittenachse 6 (in Fig. 3 dargestellt) der Gasdurchtrittsöffnung 2. Die Trägerteile 3a, 3b sind mittels zumindest eines Radialsteges 3c, vorzugsweise mittels einer Mehrzahl gleichmäßig über den Außenumfang des zweites Trägerteils 3b verteilt angeordneter Radialstege 3c untereinander fest verbunden. Bevorzugt ist das Trägerelement 3 mit seinen Trägerteilen 3a, 3b und den Radialstegen 3c einstückig aus einem Metall, beispielsweise aus Aluminium oder einer Aluminiumlegierung, oder aus einem Kunststoff oder einem faserverstärkten Kunststoff hergestellt.

Das Trägerelement 3 ist gemäß diesem Ausführungsbeispiel lösbar mit dem Gehäuse 1 verbunden und zwar nach Art eines an sich bekannten Bajonettverschlusses 7. Hierzu weist das Gehäuse 1 zwei oder mehr, vorliegend drei gleichmäßig über den Umfang verteilt angeordnete und sich in Schließrichtung verjüngende Schlitze 7a auf, in welche je ein hakenförmiger Fortsatz 7b des ersten Trägerteils 3a des Trägerelements 3 formschlüssig eindringt und sich letztlich infolge einer Drehbewegung des Trägerelements 3 an der Innenkontur der Gehäusewandung 1a des Gehäuses 1 axial abstützt. Die Verbindung erfolgt demgemäß über eine Steck-Dreh-Bewegung. Um eine stabile und dichte Verbindung zwischen dem Trägerelement 3 und dem Gehäuse 1 zu bewirken, ist zwischen denselben ein ringförmiges Dichtungselement 8 angeordnet. Das Dichtungselement 8 kann beispielsweise eine lichthärtende, flüssige Flächendichtung sein, welche auch als FIP(F)-Dichtung bezeichnet wird, wobei FIP für "Formed-In-Place" (engl.) steht.

Die Erfindung beschränkt sich jedoch nicht auf diese bevorzugte und besonders einfach zu bewerkstelligende formschlüssige Fügemaßnahme zwischen dem Trägerelement 3 und dem Gehäuse 1, sondern erfasst jedwede an sich bekannte, geeignete form- und/oder auch kraftschlüssige Fügemaßnahme. So können das Trägerelement 3 und das Gehäuse 1 auch mittels einer an sich bekannten Rastverbindung mit Rasthaken und Rastaufnahmen, durch Verschraubung und/oder dgl. mehr untereinander gefügt sein. Darüber hinaus ist durch die Erfindung auch eine nicht lösbare Fügeverbindung mit erfasst, beispielsweise infolge Klebung oder Schweißung oder durch einstückige Ausbildung, indem diese sozusagen in einem Stück gegossen werden (nicht zeichnerisch dargestellt).

Wie den Fig. 1 bis 3 weiter zu entnehmen ist, ist die Gasdurchtrittsöffnung 2 von einem Siebelement 9 eingenommen. Das Siebelement 9 ist vorliegend einstückig mit dem Gehäuse 1 ausgebildet. Alternativ kann das Siebelement 9 auch als Anbauteil ausgebildet sein (nicht zeichnerisch dargestellt). Im Hinblick auf die Gewährleistung einer elektromagnetischen Verträglichkeit (EMV) des mit der Druckausgleichsvorrichtung bestückten Behälters 1 besteht das Siebelement 9 aus einem metallischen Werkstoff, wie Aluminium oder einer Aluminiumlegierung, oder einem nichtmetallischen Werkstoff, wie einem Kunststoff oder einem faserverstärkten Kunststoff, welcher nichtmetallische Werkstoff jedoch mit einer Metallschicht, beispielsweise einer nicht zeichnerisch dargestellten Metallfolie beschichtet ist.

Wie insbesondere den Fig. 1 und 2 weiter zu entnehmen ist, ist eine in Abhängigkeit einer Änderung des Innendrucks im Gehäuse 1 verformbare, gaspermeable Membran 10 vorgesehen, die gemäß diesem Ausführungsbeispiel als Ring-Membran 10 ausgebildet ist und den ersten, radial außen angeordneten Gasdurchtrittskanal 4 des Trägerelements 3 abdeckt und wasserdicht verschließt. Die Membran 10 ist auf Stützflächen 11, 12 des ersten und zweiten Trägerteils 3a, 3b abgestützt und an denselben befestigt, beispielsweise mit denselben verklebt.

Des Weiteren ist ein Deckelelement 13 vorgesehen, welches unter Vermittlung eines Dichtelementes 14, vorliegend einer Dichtungsplatte aus bevorzugt einem Elastomer, zunächst den zweiten Gasdurchtrittskanal 5 abdeckt und fluiddicht verschließt. Das Deckelement 13 erstreckt sich weiter radial über den ersten Gasdurchtrittskanal 4 hinaus und ist radial außen mittels eines abgestellten Ringflansches 15 am ersten Trägerteil 3a des Trägerelements 3 lösbar befestigt. Vorliegend ist eine Schraubverbindung 16 zwischen dem Trägerteil 3a des Trägerelements 3 und dem Deckelelement 13 gewählt, jedoch beschränkt sich die Erfindung nicht auf eine solche Fügeverbindung, sondern erfasst jedwede an sich bekannte lösbare Fügeverbindung, beispielsweise eine Verbindung durch Verrastung mittels Rasthaken, die mit Rastaufnahmen korrespondieren (nicht zeichnerisch dargestellt). An der Oberseite des Deckelelements 13 ist ein sogenannter Sechskant 17 angeformt, an welchen ein geeignetes, nicht zeichnerisch dargestelltes Werkzeug zum Verschrauben angreifen kann.

Bevorzugt besteht das Deckelelement 13 aus einem Kunststoff oder einem faserverstärkten Kunststoff. Das Dichtelement 14 respektive die Dichtplatte ist weiter bevorzugt einstückig mit dem Deckelelement 13 ausgebildet, beispielsweise nach einem Zweikomponenten-Kunststoff-Spritzgießverfahren an das Deckelelement 13 angespritzt.

Gemäß den Fig. 1 und 3 überdeckt das Deckelelement 13 den ersten Gasdurchtrittskanal 4 in einer bestimmten Beabstandung. Die Beabstandung ist derart gewählt, dass die der Druckausgleichsvorrichtung immanente Verformbarkeit der Membran 10 bis gegebenenfalls zum Zerbersten derselben bei überhöhtem Innendruck im Behälter 1 ermöglicht ist. Zwischen dem mittels der ringförmigen Membran 10 verschlossenen ersten Gasdurchtrittskanal 4, der seinerseits den zweiten Gasdurchtrittskanal 5 konzentrisch umgibt, und dem Deckelelement 13 ist ein ringförmiger Raum 18 gebildet. Der besagte Raum 18 ist über wenigstens eine zumindest gasdurchlässige Öffnung 19 im Deckelelement 13 mit der Atmosphärendruck aufweisenden Umgebung 20 des Gehäuses 1 verbunden.

Gemäß Fig. 4 ist dem Trägerelement 3 ein mit dem Deckelelement 13 austauschbares und somit mit dem Trägerelement 3 fluiddicht, jedoch lösbar verbindbares Prüfanschluss-Element 21 zugeordnet. Das Prüfanschluss-Element 21 weist im Hinblick auf die voneinander separierten Gasdurchtrittskanäle 4, 5 je Gasdurchtrittskanal 4, 5 einen Leitungsanschluss 22, 23 zur Anbindung der Gasdurchtrittskanäle 4, 5 an eine vorliegend äußerst schematisch dargestellte Prüfvorrichtung 24 auf. Mittels der Prüfvorrichtung 24 ist eine komfortable Funktionsprüfung der verbauten Druckausgleichsvorrichtung, insbesondere der Membran 10, sowie eine Prüfung der verbauten Druckausgleichsvorrichtung und des Gehäuses 1 auf Dichtigkeit ermöglicht. Auf eine detaillierte Darstellung und Beschreibung der Prüfvorrichtung 24 wurde verzichtet, da sie nicht selbstständiger Gegenstand der Erfindung ist.

Das Prüfanschluss-Element 21 ist gemäß diesem Ausführungsbeispiel zweiteilig ausgebildet. Ein erstes Element-Teil 21a weist die beiden Leitungsanschlüsse 22, 23 auf, die derart positioniert sind, dass diese den jeweils zugeordneten Gasdurchtrittskanal 4, 5 fortsetzen. Das erste Element-Teil 21a stützt sich unter Vermittlung von Dichtungselementen 25, 26, insbesondere Ringdichtungen, bevorzugt aus einem Elastomer, sowohl auf dem ersten als auch auf dem zweiten Trägerteil 3a, 3b des Trägerelements 3 ab. Des Weiteren ist ein zweites-Element-Teil 21b in Form einer Überwurfmutter vorgesehen, das/die in Anlehnung an das Deckelelement 13 mit dem ersten Trägerteil 3a verschraubbar ist (Schraubverbindung 16) und eine feste sowie fluiddichte Verbindung zwischen dem ersten Element-Teil 21a und dem Trägerelement 3 bewirkt. Wie bereits oben zum Deckelement 13 ausgeführt, beschränkt sich die Erfindung nicht auf eine Schraubverbindung 16, sondern erfasst jedwede an sich bekannte lösbare Fügeverbindung, beispielsweise eine Verbindung durch Verrastung mittels Rasthaken, die mit Rastaufnahmen korrespondieren (nicht zeichnerisch dargestellt).

Bevorzugt besteht das Prüfanschluss-Element 21 aus einem Kunststoff oder einem faserverstärkten Kunststoff. Auch hier können die Dichtelemente 25, 26 einstückig mit dem Prüfanschluss-Element 21 ausgebildet, beispielsweise nach einem ZweikomponentenKunststoff-Spritzgießverfahren an das Prüfanschluss-Element 21 angespritzt sein.

Im Hinblick auf ein durchzuführendes Prüfverfahren sind die Gasdurchtrittskanäle 4, 5 einzeln absperrbar. Das besagte Absperren kann durch eine dem jeweiligen Gasdurchtrittskanal 4, 5 zugeordnete oder zuordenbare Absperrvorrichtung (nicht zeichnerisch dargestellt), die bevorzugt im Bereich des Leitungsanschlusses 22, 23 angeordnet ist, bewerkstelligt werden. Vorzugsweise wird besagtes Absperren jedoch durch die insbesondere mittels Druckschläuchen an die Leitungsanschlüsse 22, 23 angeschlossene Prüfvorrichtung 24 selbst bewirkt (nicht zeichnerisch dargestellt).

Das vorstehend beschriebene Ausführungsbeispiel stellt auf eine Druckausgleichsvorrichtung dar, deren voneinander separierte Gasdurchtrittskanäle 4, 5 konzentrisch zueinander angeordnet sind, wobei der erste Gasdurchtrittskanal 4 den zweiten Gasdurchtrittskanal 5 konzentrisch umgibt und von besagter Membran 10 abgedeckt ist, und wobei das Deckelelement 13 den zweiten Gasdurchtrittskanal 5 unter Vermittlung des Dichtelements 14 fluiddicht verschließt. Die Erfindung beschränkt sich jedoch nicht auf diese bevorzugte Ausführungsform, sondern erfasst in äquivalenter Ausbildung derselben auch eine Druckausgleichsvorrichtung, deren voneinander separierte Gasdurchtrittskanäle 4, 5 zwar ebenfalls konzentrisch zueinander angeordnet sind, jedoch nunmehr der zweite Gasdurchtrittskanal 5 von besagter Membran 10 abgedeckt ist und das Deckelelement 13 den ersten Gasdurchtrittskanal 4 unter Vermittlung eines Dichtelements 14 fluiddicht verschließt. In diesem Fall ist das Deckelelement 13 ferner derart ausgebildet, dass es im Bereich des zweiten Gasdurchtrittskanals 5 beabstandet zur Membran 10 ausgebildet ist und in diesem Bereich besagte zumindest eine Öffnung 19 zur Umgebung 20 aufweist (nicht zeichnerisch dargestellt).

Fernerhin ist durch die Erfindung auch eine Druckausgleichvorrichtung mit erfasst, deren Gasdurchtrittskanäle 4, 5 nebeneinander, vorzugsweise achsparallel nebeneinander angeordnet sind. Auch hier ist bei struktureller Anpassung des Trägerelements 3 und des Deckelelements 14 sowie des Prüfanschluss-Elements 21 an die Gasdurchtrittskanäle 4, 5 die Grundidee der Erfindung verwirklicht.

Schließlich ist die Erfindung nicht auf eine weitestgehend rotationssymmetrisch ausgebildete Druckausgleichsvorrichtung beschränkt. So kann diese beispielsweise entgegen der vorliegend favorisierten kreisrunden Grundfläche eine Grundfläche beschreiben, die an ein Polygon angelehnt ist und durch ausschließlich lineares Aufstecken und Verrasten mit dem Gehäuse 1 verbindbar ist (nicht zeichnerisch dargestellt).

**Bezugszeichenliste**

| | | | |
|---|---|---|---|
| 1 | Gehäuse | 12 | Stützfläche |
| 1a | Gehäusewandung | 13 | Deckelelement |
| 2 | Gasdurchtrittsöffnung | 14 | Dichtelement |
| 3 | Trägerelement | 15 | Ringflansch (Deckelelement 13) |
| 3a | erstes Trägerteil | 16 | Schraubverbindung |
| 3b | zweites Trägerteil | 17 | Sechskant |
| 3c | Radialsteg | 18 | Raum |
| 4 | erster Gasdurchtrittskanal | 19 | Öffnung |
| 5 | zweiter Gasdurchtrittskanal | 20 | Umgebung |
| 6 | Mittenachse (Gasdurchtrittsöffnung 2) | 21 | Prüfanschluss-Element |
| 7 | Bajonettverschluss | 21a | erstes Element-Teil |
| 7a | Schlitz | 21b | zweites Element-Teil |
| 7b | Fortsatz | 22 | Leitungsanschluss |
| 8 | Dichtelement | 23 | Leitungsanschluss |
| 9 | Siebelement | 24 | Prüfvorrichtung |
| 10 | Membran | 25 | Dichtungselement |
| 11 | Stützfläche | 26 | Dichtungselement |

## Patentansprüche

1. Vorrichtung zum Ausgleichen eines Innendruckes in einem geschlossenen Gehäuse (1), insbesondere einem Gehäuse (1), in welchem ein elektrochemisches Speichersystem angeordnet ist, mit einem eine Gasdurchtrittsöffnung (2) im Gehäuse (1) abdeckenden und mit dem Gehäuse (1) fluiddicht verbundenen Trägerelement (3), an dem eine in Abhängigkeit einer Änderung des Innendrucks im Gehäuse (1) verformbare, gaspermeable Membran (10) gelagert ist, die einen ersten Gasdurchtrittskanal (4) des Trägerelements (3) wasserdicht verschließt, **dadurch gekennzeichnet, dass** das Trägerelement (3) einen zweiten Gasdurchtrittskanal (5) aufweist, der von einem lösbar am Trägerelement (3) befestigten Deckelelement (13) abgedeckt und fluiddicht verschlossen ist.

2. Vorrichtung nach Anspruch 1, **dadurch gekennzeichnet, dass** das Deckelelement (13) darüber hinaus den ersten Gasdurchtrittskanal (4) derart beabstandet zur Membran (10) überdeckt, dass deren Verformbarkeit infolge Veränderung des Innendrucks im Behälter (1) gewährleistet ist.

3. Vorrichtung nach Anspruch 2, **dadurch gekennzeichnet, dass** die Beabstandung zwischen dem Deckelelement (13) und dem ersten Gasdurchtrittskanal (4) derart gewählt ist, dass bei einem definierten überhöhten Innendruck im Gehäuse (1) der Membran (10) erlaubt ist, zu bersten.

4. Vorrichtung nach einem der Ansprüche 1 bis 3, **dadurch gekennzeichnet, dass** die beiden Gasdurchtrittskanäle (4, 5) des Trägerelements (3) gemäß einer ersten Alternative konzentrisch zueinander oder gemäß einer zweiten Alternative nebeneinander angeordnet sind.

5. Vorrichtung nach Anspruch 4, **dadurch gekennzeichnet, dass** im Hinblick auf die erste Alternative der erste Gasdurchtrittskanal (4) den zweiten Gasdurchtrittskanal (5) konzentrisch umgibt und zwischen dem Deckelelement (13) und dem mit einer Ring-Membran (10) verschlossenen ersten Gasdurchtrittskanal (4) ein ringförmiger Raum (18) gebildet ist, welcher Raum (18) über wenigstens eine zumindest gasdurchlässige Öffnung (19) im Deckelelement (13) mit der Atmosphärendruck aufweisenden Umgebung (20) des Gehäuses (1) verbunden ist.

6. Vorrichtung nach einem der Ansprüche 1 bis 5, **dadurch gekennzeichnet, dass** das Trägerelement (3) lösbar am Gehäuse (1) oder lösbar an einem die Gasdurchtrittsöffnung (2) im Gehäuse (1) einehmenden Siebelement (9) befestigt ist.

7. Vorrichtung nach Anspruch 6, **dadurch gekennzeichnet, dass** das Trägerelement (3) nach Art eines Bajonettverschlusses (7) am Gehäuse (1) oder Siebelement (9) befestigt ist.

8. Vorrichtung nach Anspruch 6 oder 7, **dadurch gekennzeichnet, dass** das Siebelement (9) aus einem metallischen oder einem nichtmetallischen Werkstoff besteht, welcher nichtmetallische Werkstoff jedoch mit einer Metallschicht beschichtet ist.

9. Vorrichtung nach einem der Ansprüche 6 bis 8, **dadurch gekennzeichnet, dass** das Siebelement (9) einstückig mit dem Gehäuse (1) oder als Anbauteil ausgebildet ist.

10. Vorrichtung nach einem der Ansprüche 1 bis 9, **dadurch gekennzeichnet, dass** dem Trägerelement (3) ein mit dem Deckelelement (13) austauschbares und somit mit dem Trägerelement (3) fluiddicht, jedoch lösbar verbindbares Prüfanschluss-Element (21) zugeordnet ist, welches Prüfanschluss-Element (21) je Gasdurchtrittskanal (4, 5) einen Leitungsanschluss (22, 23) zur Anbindung der Gasdurchtrittskanäle (4, 5) an eine Prüfvorrichtung (24) aufweist.

## Claims

1. Device for equalizing an internal pressure in a closed housing (1), in particular a housing (1) in which an electrochemical storage system is arranged, with a support element (3) which covers a gas passage opening (2) in the housing (1) and is connected to the housing (1) in a fluid-tight manner and on which is mounted a gas-permeable membrane (10) which is deformable depending on a change in the internal pressure in the housing (1) and closes a first gas passage channel (4) of the support element (3) in a water-tight manner, **characterized in that** the support element (3) has a second gas passage channel (5) which is covered and closed in a fluid-tight manner by a cover element (13) fastened releasably to the support element (3).

2. Device according to Claim 1, **characterized in that** the cover element (13) furthermore covers the first gas passage channel (4) at a distance from the membrane (10) in such a manner that the deformability of the latter as a result of a change in the internal pressure in the container (1) is ensured.

3. Device according to Claim 2, **characterized in that** the spacing between the cover element (13) and the first gas passage channel (4) is selected in such a manner that, at a defined excessive internal pressure of the housing (1), the membrane (10) is permitted to burst.

4. Device according to one of Claims 1 to 3, **characterized in that** the two gas passage channels (4, 5) of the support element (3) are arranged concentrically with respect to each other according to a first alternative or next to each other according to a second alternative.

5. Device according to Claim 4, **characterized in that**, with regard to the first alternative, the first gas passage channel (4) concentrically surrounds the second gas passage channel (5) and an annular space (18) is formed between the cover element (13) and the first gas passage channel (4), which is closed by an annular membrane (10), which space (18) is connected via at least one gas-permeable opening (19) in the cover element (13) to the atmospheric-pressure surroundings (20) of the housing (1).

6. Device according to one of Claims 1 to 5, **characterized in that** the support element (3) is fastened releasably to the housing (1) or releasably to a strainer element (9) occupying the gas passage opening (2) in the housing (1).

7. Device according to Claim 6, **characterized in that** the support element (3) is fastened in the manner of a bayonet closure (7) to the housing (1) or strainer element (9).

8. Device according to Claim 6 or 7, **characterized in that** the strainer element (9) is composed of a metallic or a non-metallic material, which non-metallic material, however, is coated with a metal layer.

9. Device according to one of Claims 6 to 8, **characterized in that** the strainer element (9) is formed integrally with the housing (1) or as an add-on part.

10. Device according to one of Claims 1 to 9, **characterized in that** the support element (3) is assigned a test connection element (21) which is interchangeable with the cover element (13) and is therefore connectable in a fluid-tight but releasable manner to the support element (3), which test connection element (21) has a line connection (22, 23) per gas passage channel (4, 5) for connecting the gas passage channels (4, 5) to a test device (24).

## Revendications

1. Dispositif, destiné à compenser une pression intérieure dans un carter (1) fermé, notamment un carter (1) dans lequel est placé un système d'accumulation électrochimique, pourvu d'un élément porteur (3) recouvrant un orifice de passage gazeux (2) dans le carter (1) et relié de manière étanche aux fluides au carter (1), au niveau duquel est logée une membrane (10) perméable au gaz, déformable en fonction d'une variation de la pression intérieure dans le carter (1), qui ferme de manière étanche à l'eau un premier conduit de passage gazeux (4) de l'élément porteur (3), **caractérisé en ce que** l'élément porteur (3) comporte un deuxième conduit de passage gazeux (5) qui est recouvert par un élément de couverture (13) fixé de manière amovible sur l'élément porteur (3) et qui est fermé de manière étanche aux fluides.

2. Dispositif selon la revendication 1, **caractérisé en ce que** l'élément de couverture (13) recouvre par ailleurs le premier conduit de passage gazeux (4) avec un écart par rapport à la membrane (10), de telle sorte que l'aptitude à la déformation de cette dernière suite à une variation de la pression intérieure dans le récipient (1) soit assurée.

3. Dispositif selon la revendication 2, **caractérisé en ce que** l'écart entre l'élément de couverture (13) et le premier conduit de passage gazeux (4) est choisi de telle sorte qu'en présence d'une pression intérieure excessive définie dans le carter (1), la membrane (10) soit en mesure d'éclater.

4. Dispositif selon l'une quelconque des revendications 1 à 3, **caractérisé en ce que**, selon une première variante, les deux conduits de passage gazeux (4, 5) de l'élément porteur (3) sont placés de manière concentrique l'un par rapport à l'autre ou selon une seconde variante, sont placés côte à côte.

5. Dispositif selon la revendication 4, **caractérisé en ce qu'**en ce qui concerne la première variante, le premier conduit de passage gazeux (4) entoure sous forme concentrique le deuxième conduit de passage gazeux (5) et entre l'élément de couverture (13) et le premier conduit de passage gazeux (4) fermé par une membrane annulaire (10) est formé un espace annulaire (18), lequel espace (18), par l'intermédiaire d'au moins un orifice (19) au moins perméable au gaz dans l'élément de couverture (13) est relié avec l'environnement (20) du carter (1) se trouvant sous pression atmosphérique.

6. Dispositif selon l'une quelconque des revendications 1 à 5, **caractérisé en ce que** l'élément porteur (3) est fixé de manière amovible sur le carter (1) ou de manière amovible sur un élément de tamisage (9) qui occupe l'orifice de passage gazeux (2) dans le carter (1).

7. Dispositif selon la revendication 6, **caractérisé en ce que** l'élément porteur (3) est fixé à la manière d'une fermeture à baïonnette (7) sur le carter (1) ou sur l'élément de tamisage (9).

8. Dispositif selon la revendication 6 ou 7, **caractérisé en ce que** l'élément de tamisage (9) est constitué d'une matière métallique ou non métallique, laquelle matière non métallique est toutefois revêtue d'une couche métallique.

9. Dispositif selon l'une quelconque des revendications 6 à 8, **caractérisé en ce que** l'élément de tamisage (9) est conçu en monobloc avec le carter (1) ou sous la forme d'une pièce rapportée.

10. Dispositif selon l'une quelconque des revendications 1 à 9, **caractérisé en ce qu'**à l'élément porteur (3) est associé un élément de raccordement test (21) interchangeable avec l'élément de couverture (13) et ainsi susceptible d'être relié de manière étanche aux fluides, mais amovible à l'élément porteur (3), lequel élément de raccordement test (21) comporte pour chaque conduit de passage gazeux (4, 5) un raccord de conduit (22, 23) pour le raccordement des conduits de passage gazeux (4, 5) sur un dispositif d'essai (24) .
